(19) Europäisches Patentamt / European Patent Office / Office européen des brevets

(11) **EP 3 844 679 B1**

(12) **FASCICULE DE BREVET EUROPEEN**

(45) Date de publication et mention de la délivrance du brevet:
**15.01.2025 Bulletin 2025/03**

(21) Numéro de dépôt: **19758739.7**

(22) Date de dépôt: **28.08.2019**

(51) Classification Internationale des Brevets (IPC):
**G06N 3/063** *(2023.01)*   **G06N 3/04** *(2023.01)*
**G06F 15/80** *(2006.01)*

(52) Classification Coopérative des Brevets (CPC):
**G06N 3/063; G06F 15/8046; G06N 3/045**

(86) Numéro de dépôt international:
**PCT/EP2019/072903**

(87) Numéro de publication internationale:
**WO 2020/043753 (05.03.2020 Gazette 2020/10)**

(54) **ARCHITECTURE DE CALCULATEUR D'UNE COUCHE DE CONVOLUTION DANS UN RESEAU DE NEURONES CONVOLUTIONNEL**

ARCHITEKTUR EINES COMPUTERS ZUR BERECHNUNG EINER FALTUNGSSCHICHT IN EINEM NEURALEN FALTUNGSNETZWERK

ARCHITECTURE OF A COMPUTER FOR CALCULATING A CONVOLUTION LAYER IN A CONVOLUTIONAL NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2018 FR 1857852**

(43) Date de publication de la demande:
**07.07.2021 Bulletin 2021/27**

(73) Titulaire: **Commissariat à l'Energie Atomique et aux Energies Alternatives
75015 Paris (FR)**

(72) Inventeurs:
• LORRAIN, Vincent
  91160 SAULX-LES-CHARTREUX (FR)
• BICHLER, Olivier
  78125 VIEILLE-EGLISE-EN-YVELINES (FR)
• GUIBERT, Mickael
  94170 LE PERREUX-SUR-MARNE (FR)

(74) Mandataire: **Atout PI Laplace
Immeuble Up On
25 Boulevard Romain Rolland
CS 40072
75685 Paris Cedex 14 (FR)**

(56) Documents cités:
**US-A1- 2018 046 906**

• PAOLO MELONI ET AL: "NEURAghe: Exploiting CPU-FPGA Synergies for Efficient and Flexible CNN Inference Acceleration on Zynq SoCs", ARXIV.ORG, CORNELL UNIVERSITY LIBRARY, 201 OLIN LIBRARY CORNELL UNIVERSITY ITHACA, NY 14853, 4 December 2017 (2017-12-04), XP080844383

EP 3 844 679 B1

## Description

L'invention concerne les réseaux de neurones artificiels, plus précisément les réseaux de neurones convolutifs ou convolutionnels et porte en particulier sur un calculateur configuré pour mettre en oeuvre une couche de convolution dans un réseau de neurone convolutionnel.

Les réseaux de neurones artificiels constituent des modèles de calculs imitant le fonctionnement des réseaux de neurones biologiques. Les réseaux de neurones artificiels comprennent des neurones interconnectés entre eux par des synapses, qui sont classiquement implémentées par des mémoires numériques. Les synapses peuvent être également implémentées par des composants résistifs dont la conductance varie en fonction de la tension appliquée à leurs bornes. Les réseaux de neurones artificiels sont utilisés dans différents domaines de traitement du signal (visuel, sonore, ou autre) comme par exemple dans le domaine de la classification d'image ou de la reconnaissance d'image.

Les réseaux de neurones convolutionnels correspondent à un modèle particulier de réseau de neurones artificiels. Les réseaux de neurones convolutionnels ont été décrits initialement dans l'article de K. Fukushima, « Neocognitron: A self-organizing neural network model for a mechanism of pattern recognition unaffected by shift in position. Biological Cybernetics, 36(4):193-202, 1980. ISSN 0340-1200. doi: 10.1007/BF00344251 ».

Les réseaux de neurones convolutionnels (désignés en langue anglo-saxonne par les expressions "convolutional neural networks", ou "deep (convolutional) neural networks" ou encore "ConvNets") sont des réseaux de neurones sans connexion récurrente (« feedforward »), inspirés par les systèmes visuels biologiques.

Les réseaux de neurones convolutionnels (CNN) sont utilisés notamment dans des systèmes de classifications d'images pour améliorer la classification. Appliqués à la reconnaissance d'images, ces réseaux permettent un apprentissage des représentations intermédiaires d'objets dans les images qui sont plus petites et généralisables pour des objets similaires, ce qui facilite leur reconnaissance. Cependant, le fonctionnement intrinsèquement parallèle et la complexité des classificateurs classiques de type réseau de neurones convolutionnels mettent un frein à leur implémentation efficace dans les systèmes embarqués. En effet, les systèmes embarqués imposent de fortes contraintes en matière de surface et de consommation.

En particulier, les réseaux de neurones convolutionnels comprennent une ou plusieurs couche(s) de convolution qui sont particulièrement couteuses en nombres d'opération. Les opérations effectuées sont principalement des opérations de multiplication et accumulation (MAC). Par ailleurs, pour respecter les contraintes de latence et temps de traitement propres aux applications visées, il est nécessaire de paralléliser au maximum les calculs.

Il existe donc un besoin pour des calculateurs permettant de mettre en oeuvre une couche de convolution d'un réseau de neurones avec une complexité limitée permettant de satisfaire aux contraintes des systèmes embarqués et des applications visées.

Dans les architectures connues implémentant des couches de convolution, les opérations MAC sont effectuées en partie par des opérateurs de multiplication séparés des opérateurs d'addition. Le parallélisme est généralement obtenu en réalisant en parallèle des multiplications ou des sommes partielles puis en recombinant les résultats partiels à la fin du calcul, nécessitant ainsi des opérateurs d'addition supplémentaires.

Des solutions ont été proposées pour implémenter des couches de convolution de réseaux de neurones à l'aide d'architectures de calcul spécialisé. Les solutions existantes peuvent être regroupées en deux approches calculatoires, une approche de type « instruction unique, données multiples » ou « single instruction on multiple data » SIMD en anglais dans laquelle les données d'entrée sont reçues et traitées en parallèle, par blocs et une approche de type « flux de données » ou « data flow » en anglais dans laquelle les données d'entrée sont reçus au fil de l'eau séquentiellement. L'invention se positionne dans le domaine des architectures de calcul selon l'approche « data flow ».

Dans cette approche, plusieurs architectures de calcul ont été proposées.

Une première architecture possible dite « ligne buffer » ou « line buffer » en anglais consiste à aligner les données en entrée sur le filtre de convolution de sorte à réaliser le calcul de convolution entièrement en parallèle en utilisant un arbre de recombinaison de produits. Des solutions suivant cette approche sont notamment décrites dans l'article « Optimizing FPGA-based accelerator design for deep convolutional neural networks, C Zhan et al » et dans l'article « Efficient FPGA accélération of convolutional neural networks using logical 3D compute array, A Rahman et al ».

Ces solutions présentent l'inconvénient d'implémenter la structure de calcul proposée autant de fois qu'il y a de matrices d'entrée ce qui engendre un surcout en termes de surface utilisée. De plus, le fait d'aligner les valeurs d'entrée sur les coefficients du filtre de convolution complique l'utilisation de la mémoire externe.

Une seconde architecture possible dite architecture par somme partielle consiste à stocker non pas les valeurs d'entrée mais des sommes partielles du calcul de convolution. Une telle architecture est notamment décrite dans l'article « A high performance FPGA-based accelerator for large scale convolutional neural networks, H.Li et al ». Un inconvénient de cette solution est qu'elle nécessite l'emploi d'un arbre additionneur ou « adder tree » en anglais qui est un dispositif particulier composé essentiellement d'accumulateurs. D'autres architectures sont décrites dans: "NEURAghe: Exploiting CPU-FPGA Synergies for Efficient and Flexible CNN Inference Accélération on Zynq SoCs", Paolo Meloni et al, décembre 2017 ; et US 2018/046906 A1.

L'invention propose une architecture de calcul de couche de convolution qui utilise principalement des opérateurs MAC qui effectuent une addition suivie d'une multiplication. L'utilisation de tels opérateurs présente l'avantage de pouvoir exploiter efficacement les ressources d'un processeur de signaux (DSP) qui implémente nativement et de façon optimisée de tels opérateurs. Ainsi, l'invention est particulièrement adaptée pour une implémentation sous la forme d'un circuit à logique programmable de type FPGA contenant un très grand nombre (des centaines voire des milliers) de blocs de processeurs de signaux DSP.

Pour une implémentation sur un circuit intégré propre à une application (ASIC), l'implémentation d'opérateurs MAC peut également être réalisée de façon optimisée. Ainsi, l'invention ne nécessite pas de structure de calcul qui nécessite une implémentation dédiée telle qu'un arbre additionneur. L'invention présente donc l'avantage d'une implémentation nécessitant moins de logique à mettre en oeuvre et donc moins d'énergie consommée pour le circuit intégré final.

En outre, par un chaînage des calculs de convolution pour l'ensemble des matrices d'entrée, l'invention permet de minimiser le nombre d'accès en lecture et écriture mémoire par cycle et donc le nombre de blocs de mémoire RAM nécessaires.

Cela est avantageux pour l'intégration de l'architecture de calcul proposée par l'invention sur un circuit à logique programmable FPGA, qui dispose généralement de moins de blocs mémoire que de blocs de processeurs DSP. Ainsi l'invention permet d'utiliser tous les processeurs DSP d'un circuit FPGA sans que cela soit limité par le nombre de bloc mémoire RAM disponibles.

Pour une implémentation de l'invention sur un circuit intégré ASIC, il est également avantageux d'utiliser moins de blocs mémoire pour optimiser la surface et la consommation.

L'invention a pour objet un calculateur pour calculer une couche de convolution d'un réseau de neurones artificiel, comprenant au moins un ensemble d'au moins deux modules de calcul de somme partielle connectés en série, un organe de stockage des coefficients d'au moins un filtre de convolution, chaque module de calcul de somme partielle comprenant au moins une unité de calcul configurée pour réaliser une multiplication d'une donnée d'entrée du calculateur et d'un coefficient d'un filtre de convolution, suivie d'une addition avec la sortie du module de calcul de somme partielle précédent dans la série ou avec une valeur prédéfinie pour le premier module de calcul de somme partielle de la série, chaque ensemble comprenant en outre, pour chaque module de calcul de somme partielle sauf le premier de la série, un registre à décalage connecté en entrée pour stocker la donnée d'entrée pendant la durée de traitement des modules de calcul de somme partielle précédents dans la série, le calculateur comprenant en outre au moins un accumulateur connecté en sortie de chaque ensemble et une mémoire, les données d'entrée du calculateur provenant d'au moins deux matrices d'entrée, chaque module de calcul de somme partielle (PE_POOL) étant configuré pour recevoir en entrée les données d'entrée appartenant à des matrices d'entrée différentes et ayant les mêmes coordonnées dans chaque matrice d'entrée.

Selon un aspect particulier de l'invention, le calculateur fournit en sortie, pour chaque sous-matrice d'entrée de dimension égale à celle du filtre de convolution, la valeur d'un neurone de sortie correspondant, l'ensemble des neurones de sortie étant agencés dans au moins une matrice de sortie.

Selon un aspect particulier de l'invention, chaque module de calcul de somme partielle comporte au plus un nombre d'unités de calcul égal à la dimension du filtre de convolution.

Selon un aspect particulier de l'invention, chaque ensemble comporte au plus un nombre de modules de calcul de somme partielle égal au nombre de matrices d'entrée.

Selon un aspect particulier de l'invention, le calculateur comprend au plus un nombre d'ensembles égal au nombre de matrices de sortie.

Selon un aspect particulier de l'invention, pour chaque donnée d'entrée reçue, chaque module de calcul de somme partielle est configuré pour calculer un résultat partiel de convolution pour tous les neurones de sortie connectés à la donnée d'entrée.

Selon un aspect particulier de l'invention, chaque module de calcul de somme partielle comporte plusieurs unités de calcul, étant chacune configurée pour calculer un résultat partiel de convolution pour des neurones de sortie différents des autres unités de calcul.

Selon un aspect particulier de l'invention, chaque module de calcul de somme partielle est configuré, pour chaque donnée d'entrée reçue, pour sélectionner, dans l'organe de stockage, les coefficients d'un filtre de convolution correspondant aux neurones de sortie respectifs à calculer pour chaque unité de calcul.

Selon un aspect particulier de l'invention, les matrices d'entrée sont des images.

Selon un aspect particulier de l'invention, l'organe de stockage a une topologie de tore à deux dimensions.

Selon un aspect particulier de l'invention, l'au moins un accumulateur connecté en sortie de chaque ensemble est configuré pour finaliser un calcul de convolution permettant d'obtenir la valeur d'un neurone de sortie, à partir des sommes partielles délivrées par l'ensemble, la mémoire étant utilisée pour sauvegarder des résultats partiels du calcul de convolution.

Selon un aspect particulier de l'invention, les adresses des valeurs stockées dans la mémoire sont déterminées de manière à éviter que deux neurones de sortie en cours de calcul ne partagent le même bloc mémoire.

Selon un aspect particulier de l'invention, le calculateur comprend en outre un module d'activation d'un neurone de sortie connecté en sortie de chaque accumulateur.

D'autres caractéristiques et avantages de la présente invention apparaîtront mieux à la lecture de la description qui suit en relation aux dessins annexés qui représentent :

- Les figures 1a,1b,1c,1d, plusieurs illustrations du fonctionnement d'une couche de convolution d'un réseau de neurones convolutionnel,
- La figure 2, un schéma d'un module de calcul de somme partielle selon l'invention configuré pour calculer une somme partielle d'un calcul de convolution,
- La figure 2a, une illustration d'un exemple de calcul réalisé par le module de calcul décrit à la figure 2,
- La figure 2b, une illustration d'un exemple de distribution des coefficients d'un filtre dans un module de calcul de somme partielle,
- La figure 2c, un schéma d'un tore 2D pour stocker les coefficients d'un filtre en mémoire,
- La figure 2d, un schéma d'un arbre de distribution pour stocker les coefficients d'un filtre en mémoire,
- La figure 3, un schéma d'un ensemble de modules de calcul de somme partielle selon l'invention comprenant plusieurs desdits modules agencés en cascade,
- La figure 4, un schéma d'un calculateur d'une couche de convolution selon l'invention.

Un réseau de neurones convolutif ou convolutionnel est généralement constitué d'une ou plusieurs couches de convolution qui sont connectées en série ou en cascade. Une ou plusieurs couches de regroupement ou « pooling » en anglais peuvent être disposées entre deux couches de convolution.

L'invention concerne précisément une architecture de calculateur configuré pour mettre en oeuvre une couche de convolution d'un réseau de neurones convolutionnel.

Pour faciliter la compréhension de l'invention, on rappelle tout d'abord le principe général de fonctionnement d'une couche de convolution.

Une couche de convolution réalise une connexion entre une matrice d'entrée I et une matrice de sortie O. La matrice d'entrée I peut être une matrice contenant des données d'entrées fournies au réseau de neurones, lorsque la couche de convolution est la première couche du réseau de neurones. La matrice d'entrée I peut aussi être une matrice contenant les résultats fournis par une couche de convolution précédente, lorsque le réseau de neurones comporte au moins deux couches de convolution.

La matrice de sortie O comprend les valeurs des neurones qui sont connectés à la matrice d'entrée I. La matrice de sortie O peut être la matrice d'entrée d'une autre couche de convolution.

Les matrices d'entrée et de sortie peuvent aussi être appelées cartes d'entrée et de sortie.

Dans une couche de convolution, chaque neurone est connecté à au moins une partie (sous-matrice) de la matrice d'entrée I. Les sous-matrices ont la même taille pour une même couche et leur taille est égale à la taille du filtre de convolution. Elles peuvent être décalées les unes des autres de manière régulière et peuvent se chevaucher. La matrice d'entrée peut être de dimension quelconque. Elle peut notamment avoir N dimensions, N étant un nombre entier supérieur à deux. Cependant, la matrice d'entrée est généralement à deux dimensions.

Dans les cas d'applications où le réseau de neurones reçoit en entrée des images, la matrice d'entrée contient les valeurs des pixels d'une image en niveaux de gris. Pour une image en couleur ou plus généralement une image à plusieurs composantes, une matrice d'entrée différente est utilisée pour chaque composante.

Dans un réseau de neurones, les neurones sont connectés à leur sous-matrice d'entrée I par des synapses dont le poids est réglable. La matrice W des poids synaptiques (les poids synaptiques sont encore appelés « coefficient de poids» ou «coefficients de convolution » ou « pondérations ») appliquée aux sous-matrices d'entrée des neurones est la même pour tous les neurones d'une même matrice de sortie. Une telle matrice W est encore appelée filtre ou « noyau de convolution ». Le fait que le noyau de convolution soit partagé pour l'ensemble des neurones d'une même matrice de sortie O, et donc appliqué sur l'ensemble de la matrice d'entrée, diminue la mémoire nécessaire pour le stockage des coefficients, ce qui optimise les performances. Par exemple pour la reconnaissance d'images, cela permet de minimiser le nombre de filtres ou de représentations intermédiaires qui codent au mieux les caractéristiques de l'image et qui sont réutilisables sur toute l'image. Les coefficients d'un noyau de convolution W (c'est-à-dire les poids synaptiques) peuvent correspondre à des filtres classiques de traitement du signal (par exemple Gaussien, Gabor, Laplace...), ou être déterminés par apprentissage, supervisé ou non-supervisé, par exemple en utilisant un algorithme de rétro-propagation du gradient. Les coefficients des noyaux de convolution peuvent être positifs ou négatifs et sont généralement normalisés entre -1 et 1, tout comme les valeurs d'entrée et de sortie des neurones.

Une couche de convolution peut contenir un ou plusieurs noyaux de convolution qui ont chacun une matrice d'entrée, qui peut être la même, mais qui ont des coefficients différents correspondant à des filtres différents.

Chaque noyau de convolution dans une couche produit une matrice de sortie différente de sorte que les neurones de sortie sont différents pour chaque noyau. Autrement dit, plusieurs matrices de sortie différentes peuvent être connectées à une ou plusieurs matrices d'entrée différentes. Chaque matrice de sortie est associée à un filtre W différent. De même, chaque matrice d'entrée peut aussi être associée à un filtre différent.

Les réseaux convolutionnels peuvent également inclure des couches de "pooling" locales ou globales qui combinent les sorties de groupe de neurones d'une ou plusieurs cartes de sortie. La combinaison des sorties peut consister par exemple à prendre la valeur maximale ou moyenne des sorties du groupe de neurones, pour la sortie correspondante, sur la carte de sortie de la couche de « pooling ». Les couches de « pooling » permettent de réduire la taille des cartes de sorties d'une couche à l'autre dans le réseau, tout en améliorant ses performances en le rendant plus tolérant à de petites déformations ou translations dans les données d'entrée.

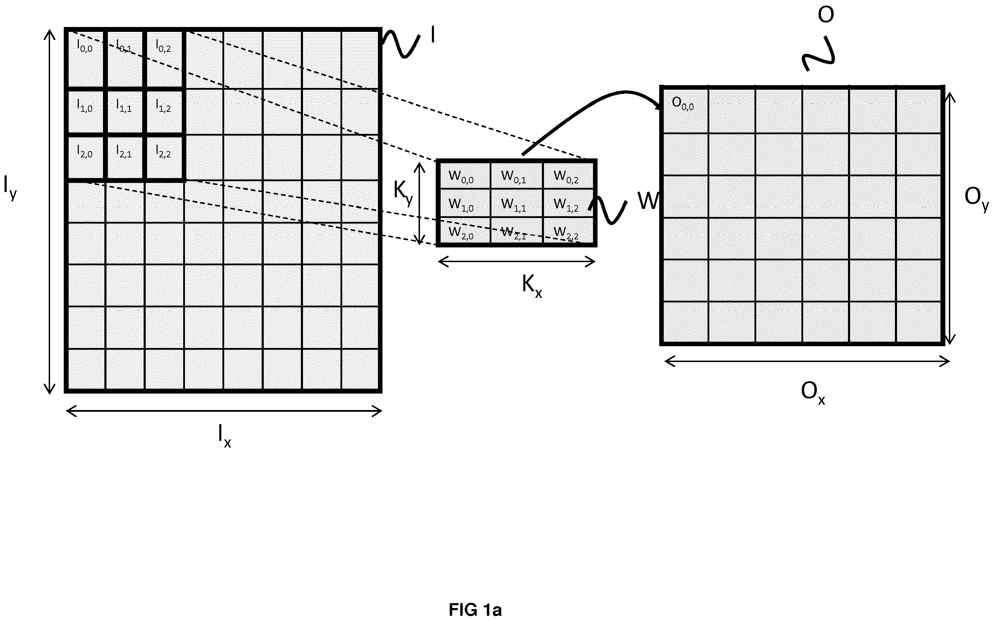

Les figures 1a-1d illustrent le fonctionnement général d'une couche de convolution.

La figure 1a représente une matrice d'entrée I de taille $(I_x, I_y)$ connectée à une matrice de sortie O de taille $(O_x, O_y)$ via une couche de convolution réalisant une opération de convolution à l'aide d'un filtre W de taille $(K_x, K_y)$.

Une valeur $O_{i,j}$ de la matrice de sortie O (correspondant à la valeur de sortie d'un neurone de sortie) est obtenue en appliquant le filtre W sur la sous-matrice correspondant de la matrice d'entrée I.

Sur la figure 1a, on a représenté la première valeur $O_{0,0}$ de la matrice de sortie O obtenue en appliquant le filtre W à la première sous-matrice d'entrée de dimensions égales à celle du filtre W.

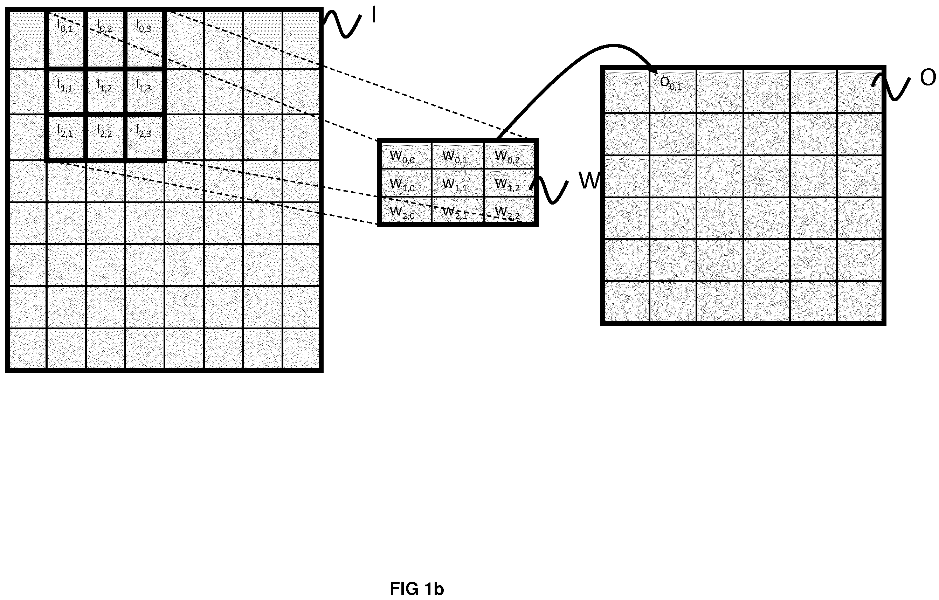

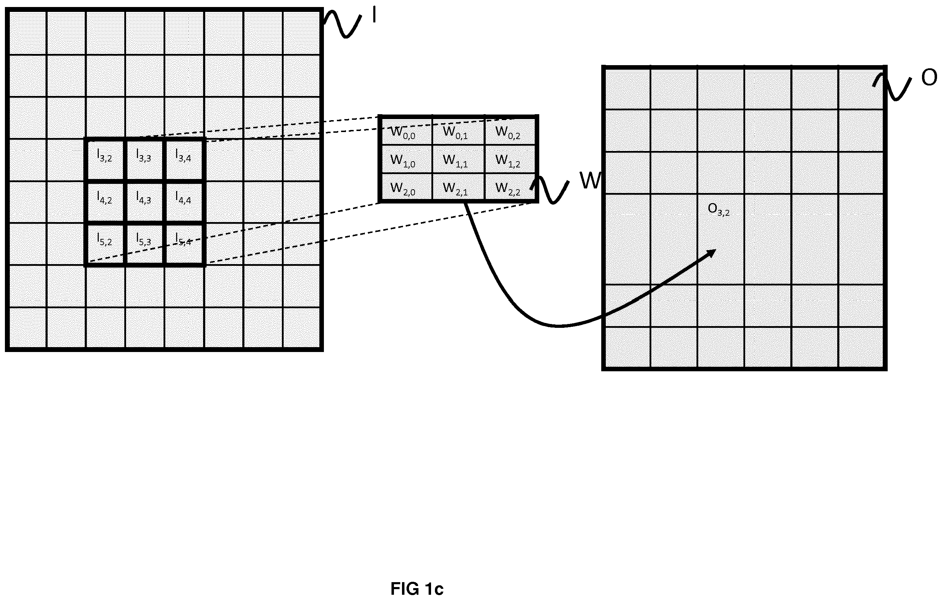

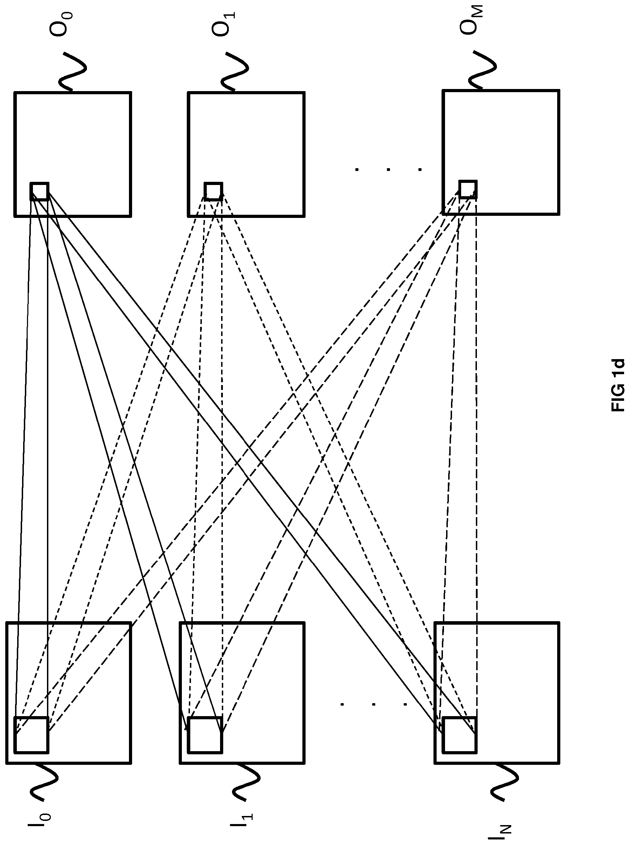

Sur la figure 1 b, on a représenté la deuxième valeur $O_{0,1}$ de la matrice de sortie O obtenue en appliquant le filtre W à la deuxième sous-matrice d'entrée.

La figure 1c représente un cas général de calcul d'une valeur $O_{3,2}$ quelconque de la matrice de sortie.

De façon générale, la matrice de sortie O est connectée à la matrice d'entrée I par une opération de convolution, via un noyau de convolution ou filtre W. Chaque neurone de la matrice de sortie O est connecté à une partie de la matrice d'entrée I, cette partie étant appelée « sous-matrice d'entrée » ou encore « champ récepteur du neurone » et étant de mêmes dimensions que le filtre W. Le filtre W est commun pour l'ensemble des neurones d'une matrice de sortie O.

Les valeurs des neurones de sortie $O_{i,j}$ sont données par la relation suivante :

$$O_{i,j} = g\left(\sum_{k=0}^{\min(K_x-1, I_x-i.s_i)} \sum_{l=0}^{\min(K_y-1, I_y-j.s_j)} I_{i.s_i+k, j.s_j+l} . W_{n,k,l}\right) \quad (1)$$

Dans la formule ci-dessus, g() désigne la fonction d'activation du neurone, tandis que $s_i$ et $s_j$ désignent les paramètres de décalage (« stride » en anglais) vertical et horizontal respectivement. Un tel décalage « stride » correspond au décalage entre chaque application du noyau de convolution sur la matrice d'entrée. Par exemple, si le décalage est supérieur ou égal à la taille du noyau, alors il n'y a pas de chevauchement entre chaque application du noyau. Le filtre $W_n$ correspond au noyau de convolution qui connecte la matrice de sortie O à une matrice d'entrée $I_n$. Différents filtres peuvent être associés à différentes matrices d'entrée, pour la même matrice de sortie.

Pour simplifier, la fonction d'activation g() n'est pas représentée sur les figures 1a-1d.

Les figures 1a-1c illustrent un cas où une seule matrice de sortie O est connectée à une seule matrice d'entrée I.

La figure 1d illustre un autre cas où plusieurs matrices de sortie $O_m$ sont connectées chacune à plusieurs matrices d'entrée $I_n$. Dans ce cas, chaque matrice de sortie $O_m$ est connectée à chaque matrice d'entrée $I_n$ via un noyau de convolution $K_{m,n}$ qui peut être différent selon la matrice de sortie.

Par ailleurs, lorsqu'une matrice de sortie est connectée à plusieurs matrices d'entrée, la couche de convolution réalise, en plus de chaque opération de convolution décrite ci-dessus, une somme des valeurs de sortie des neurones obtenues pour chaque matrice d'entrée. Autrement dit, la valeur de sortie d'un neurone de sortie est dans ce cas égale à la somme des valeurs de sorties obtenues pour chaque opération de convolution appliquée à chaque matrice d'entrée.

Les valeurs des neurones de sortie $O_{i,j}$ sont dans ce cas données par la relation suivante :

$$O_{i,j} = g\left(\sum_{n=0}^{N} \sum_{k=0}^{\min(K_x-1, I_x-i.s_i)} \sum_{l=0}^{\min(K_y-1, I_y-j.s_j)} I_{n,i.s_i+k, j.s_j+l} . W_{n,k,l}\right) \quad (2)$$

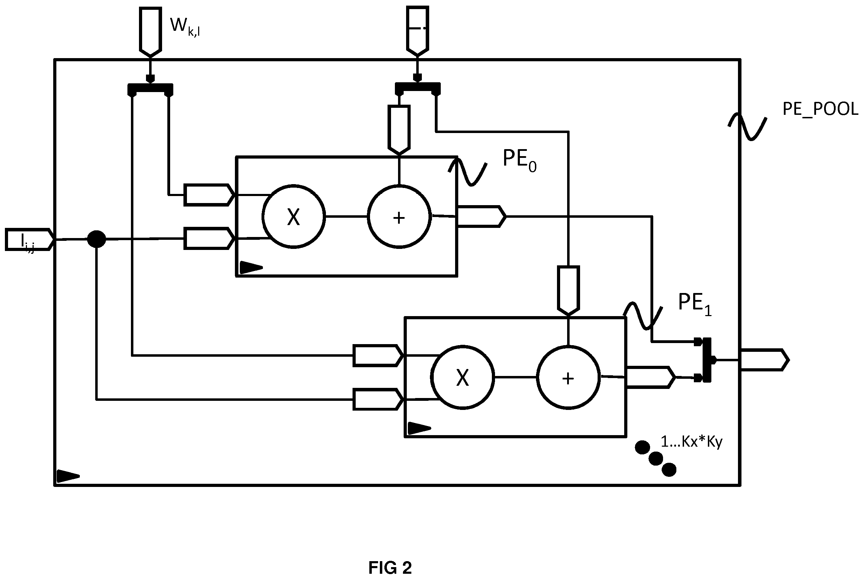

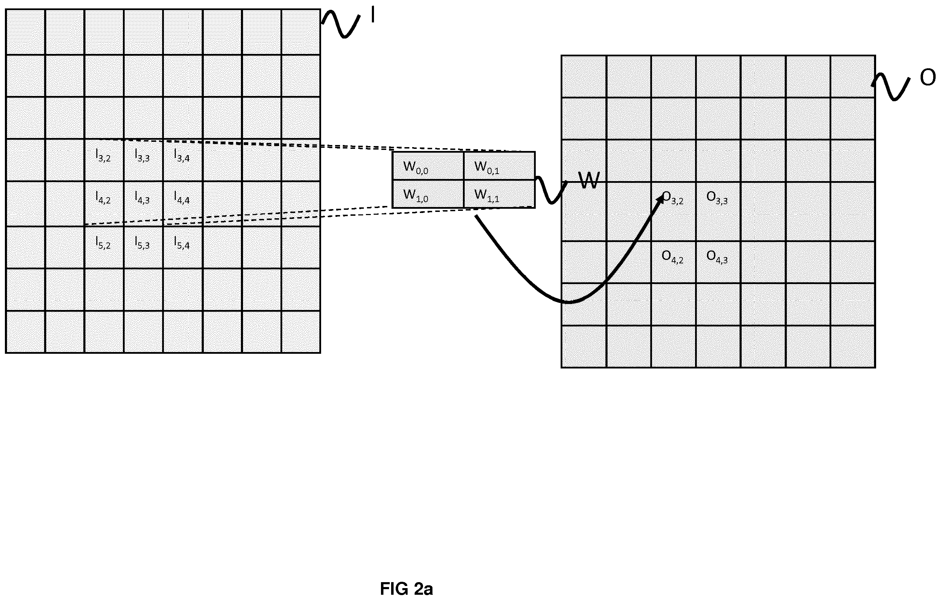

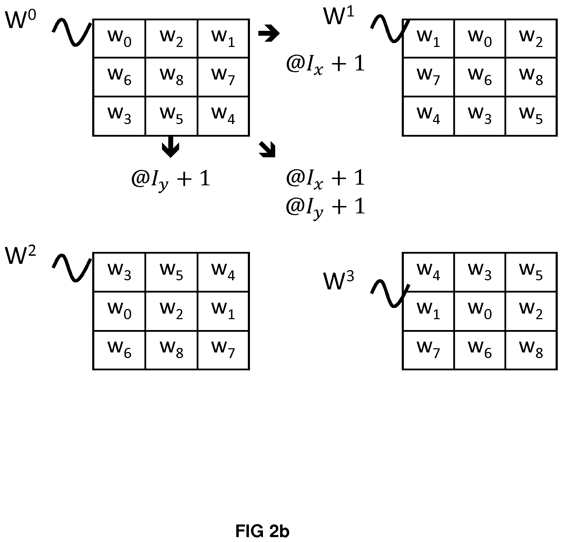

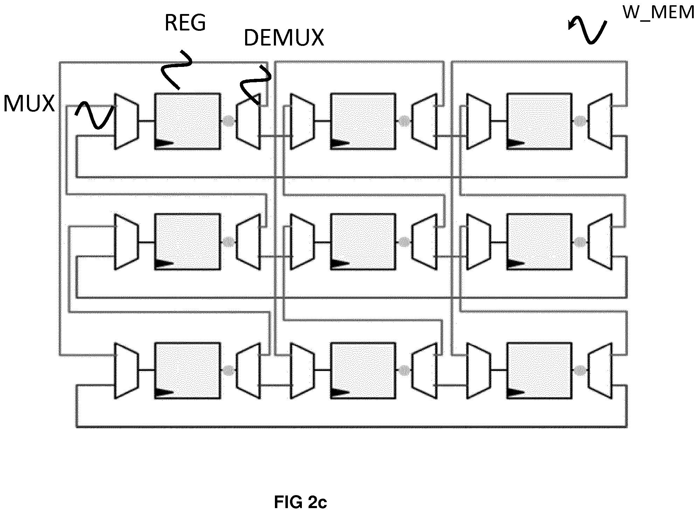

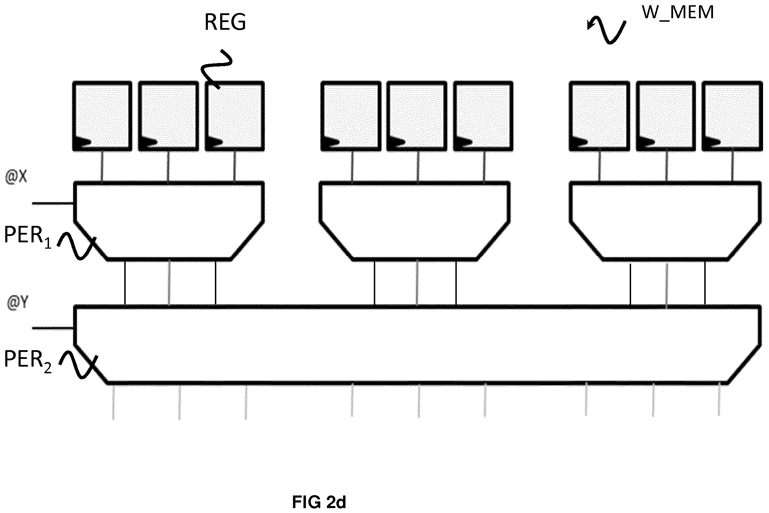

On décrit à présent, à l'appui des figures 2,3 et 4, un mode de réalisation du dispositif de calcul selon l'invention.

Comme indiqué en préambule, l'invention porte sur un calculateur configuré pour mettre en oeuvre une couche de convolution d'un réseau de neurones, réalisant la fonction décrite précédemment. Ainsi, le calculateur selon l'invention reçoit en entrée une ou plusieurs matrices d'entrée comprenant des données d'entrée et fournit en sortie une ou plusieurs matrices de sortie comprenant des valeurs de neurones de sortie. Les données d'entrée peuvent être des pixels d'une ou plusieurs images ou plus généralement des composantes d'une ou plusieurs images.

Le calculateur selon l'invention présente une architecture en trois blocs ou modules qui sont imbriqués. Chaque bloc correspond à un aspect dans le traitement de la convolution est décrit sur l'une des figures 2,3 et 4.

Un premier module de calcul PE_POOL est décrit à la figure 2. Ce premier module de calcul PE_POOL est appelé par la suite module de calcul de somme partielle. En effet, comme cela sera explicité par la suite, un module de calcul PE_POOL réalise une somme partielle du calcul global de convolution permettant d'obtenir les valeurs de sortie des neurones.

Un module de calcul de somme partielle PE_POOL comporte une ou plusieurs unités de calcul $PE_0, PE_1$ identiques chacune étant configurée pour réaliser une opération de multiplication de deux valeurs d'entrée suivie d'une opération d'addition du résultat de la multiplication avec une troisième valeur. Autrement dit, une unité de calcul $PE_0, PE_1$ est configurée pour réaliser une opération dite de multiplication puis accumulation encore appelé « multiply-accumulate » en anglais ou plus simplement MAC. Dans la suite de la description, les unités de calcul $PE_0, PE_1$ seront appelées unités de calcul MAC.

Un module de calcul de somme partielle PE_POOL comporte un nombre d'unités de calcul MAC compris entre un et $K_x*K_y$, selon le degré de parallélisation visé. Par exemple si le nombre d'unités de calcul MAC est égal à $K_x*K_y$, les calculs réalisés par un module de calcul de somme partielle PE_POOL sont entièrement parallélisés. Au contraire, s'il ne comporte qu'une seule unité de calcul MAC, tous les calculs réalisés sont séquentiels. Enfin, si ce nombre est strictement compris entre un et $K_x*K_y$, les calculs sont partiellement parallélisés et partiellement séquentialisés.

Un module de calcul de somme partielle PE_POOL reçoit, à chaque cycle d'horloge, une valeur $I_{i,j}$ d'une matrice d'entrée I, la matrice étant lue séquentiellement ligne après ligne. Chaque unité de calcul MAC $PE_0, PE_1$ reçoit cette valeur $I_{i,j}$ sur une entrée et reçoit un coefficient $W_{k,l}$ du noyau de convolution, sur une autre entrée. Une unité de calcul MAC réalise une multiplication de ces deux entrées, puis réalise une addition du résultat avec une valeur i qui correspond, dans le cas général, à la sortie d'un autre module de calcul de somme partielle PE_POOL comme cela sera explicité par la suite.

Le nombre d'unités de calcul MAC est au plus égal à la dimension du noyau de convolution car, dans une couche de convolution, il y a au maximum $K_x*K_y$ neurones de sortie connectés à la même donnée d'entrée de la matrice d'entrée.

La figure 2a illustre, sur un exemple, les calculs effectués par un module de calcul de somme partielle PE_POOL pour une donnée d'entrée $I_{4,3}$ reçue en entrée. Dans l'exemple de la figure 2a, le noyau de convolution W comprend quatre coefficients et est de taille $K_x*K_y$ =2x2.

Chaque donnée de la matrice d'entrée I est au plus connectée à $K_x*K_y$ = 4 neurones de sortie. Autrement dit, chaque donnée de la matrice d'entrée I contribue au calcul de la valeur de 4 neurones de sortie. Dans l'exemple illustré à la figure 2a, la donnée d'entrée $I_{4,3}$ est connectée aux quatre neurones de sortie $O_{3,2}, O_{3,3}, O_{4,2}, O_{4,3}$. Par exemple, la valeur du neurone de sortie $O_{3,2}$ est obtenue en appliquant le filtre W à la sous-matrice d'entrée formée des données $I_{3,2}, I_{3,3}, I_{4,2}, I_{4,3}$. La valeur du neurone de sortie $O_{3,3}$ est obtenue en appliquant le filtre W à la sous-matrice d'entrée formée des données $I_{3,3}, I_{3,4}, I_{4,3}, I_{4,4}$. Ainsi, la donnée d'entrée $I_{4,3}$ est commune aux quatre sous-matrices d'entrée connectées respectivement aux quatre neurones de sortie considérés.

Ce principe est valable pour toutes les données d'entrée à la différence près que les données d'entrées situées sur les bords de la matrice d'entrée I sont connectées à au moins un neurone de sortie et au plus $K_x*K_y$ - 1 neurones de sortie.

Cette constatation sert de base à la mise en oeuvre du calcul opéré par un module de calcul de somme partielle PE_POOL. En effet, pour chaque donnée d'entrée, un module de calcul de somme partielle calcule tous les produits entre cette donnée d'entrée et un coefficient du filtre W qui contribuent partiellement au calcul de la valeur d'un neurone de sortie connecté à cette donnée d'entrée.

En considérant l'exemple de la figure 2a, un module de calcul de somme partielle réalise les opérations suivantes pour la donnée d'entrée $I_{4,3}$ :

- le produit $I_{4,3}*W_{1,1}$ qui intervient dans le calcul du neurone de sortie $O_{3,2}$,
- le produit $I_{4,3}*W_{1,0}$ qui intervient dans le calcul du neurone de sortie $O_{3,3}$,
- le produit $I_{4,3}*W_{0,1}$ qui intervient dans le calcul du neurone de sortie $O_{4,2}$,
- le produit $I_{4,3}*W_{0,0}$ qui intervient dans le calcul du neurone de sortie $O_{4,3}$.

Chaque produit calculé est ensuite sommé avec la donnée i qui sera explicitée par la suite.

Chaque module de calcul de somme partielle traite une donnée d'entrée pendant une durée $T_c$ (exprimée en nombre de cycles d'horloge). Cette durée de traitement $T_c$ dépend du degré de parallélisation implémenté c'est-à-dire du nombre Nb_PE d'unités de calcul MAC fonctionnant en parallèle dans un module de calcul de somme partielle. Précisément, $T_c = E\{(K_x*K_y)/Nb\_PE\}$, où E{} désigne la partie entière supérieure. Si le nombre Nb_PE d'unités de calcul MAC est égal à la dimension $K_x*K_y$ du noyau de convolution (qui est aussi égale au nombre de neurones de sortie connectés à une même donnée d'entrée), le degré de parallélisation est maximal et la durée $T_c$ de traitement d'une donnée d'entrée est égale à un cycle d'horloge (en faisant l'hypothèse qu'un calcul MAC est effectué en 1 cycle). A l'inverse, si une seule unité de calcul MAC est disponible, les calculs réalisés sur une donnée d'entrée sont entièrement sérialisés et la durée $T_c$ est égale à $K_x*K_y$ cycles d'horloge.

En reprenant l'exemple de la figure 2a pour lequel $K_x*K_y$ = 4, si le module de calcul de somme partielle comporte une seule unité de calcul MAC, celle-ci gère le traitement d'une donnée d'entrée en quatre cycles d'horloge pour calculer les contributions de cette donnée d'entrée aux calculs de quatre neurones de sortie. Si le module de calcul de somme partielle comporte deux unités de calcul MAC, chacune gère le traitement de la donnée d'entrée pour calculer les contributions aux calculs de deux neurones de sortie différents parmi les quatre neurones de sortie connectés à la donnée d'entrée. Le traitement global de la donnée d'entrée dure deux cycles d'horloge. Si le module de calcul de somme partielle comporte trois unités de calcul MAC, une unité gère le traitement de la donnée d'entrée pour calculer les contributions aux calculs de deux neurones de sortie et les deux autres unités gèrent le traitement de la donnée d'entrée pour calculer les contributions aux calculs respectifs de deux autres neurones de sortie. Dans ce cas de figure, le traitement de la donnée d'entrée par la première unité de calcul MAC dure deux cycles d'horloge tandis que le traitement de la donnée d'entrée par les deux autres unités de calcul MAC ne dure qu'un cycle d'horloge. Globalement, le temps de traitement d'une donnée d'entrée par le module de calcul de somme partielle est de deux cycles d'horloge (durée de traitement maximale parmi les trois unités de calcul MAC). Enfin, si le module de calcul de somme partielle comporte quatre unités de calcul MAC, chacune gère le traitement de la donnée d'entrée relatif à un neurone de sortie différent et la durée de traitement global de la donnée d'entrée est égale à un cycle d'horloge.

Ainsi, le niveau de parallélisation du module de calcul de somme partielle est entièrement paramétrable.

A chaque cycle d'horloge, une unité de calcul MAC doit lire un coefficient du filtre W pour réaliser une multiplication avec la donnée d'entrée en vue du calcul d'un neurone de sortie différent. Selon le degré de parallélisation, les coefficients de pondération du filtre sont lus en parallèle et distribués à chaque unité de calcul ou sont lus séquentiellement par paquets ou les deux à la fois.

Le tableau suivant illustre un exemple de distribution des coefficients de pondération d'un filtre de dimensions 3x3 vers trois unités de calcul $PE_0$, $PE_1$, $PE_2$. La durée de traitement d'une donnée d'entrée est égale à trois cycles d'horloges. Le tableau suivant donne, pour chaque cycle d'horloge, les indices des coefficients de pondération délivrés à chaque unité de calcul pour le traitement successif de deux données d'entrée $I_0$ et $I_1$. Les indices des coefficients de pondération correspondent à une lecture ligne par ligne, de gauche à droite.

| Cycle | 0 | 1 | 2 | 3 | 4 | 5 |
|---|---|---|---|---|---|---|
| $PE_0$ | 0 | 3 | 6 | 1 | 4 | 7 |
| $PE_1$ | 2 | 5 | 8 | 0 | 3 | 6 |
| $PE_2$ | 1 | 4 | 7 | 2 | 5 | 8 |
| Donnée d'entrée | $I_0$ | $I_0$ | $I_0$ | $I_1$ | $I_1$ | $I_1$ |

Un module de calcul de somme partielle PE_POOL fournit en sortie un vecteur de sommes partielles dont la taille est égale au nombre d'unités de calcul au sein du module. Chaque valeur du vecteur est associée à un neurone de sortie différent.

Il existe une relation directe entre les adresses des données d'entrée ($@I_x$,$@I_y$), des coefficients du filtre ($@W_x$,$@W_y$) et des neurones de sortie ($@O_x$,$@O_y$) :

$$\begin{cases} @o_x = @I_x - @w_x \\ @o_y = @I_y - @w_y \end{cases}$$

Les coefficients du filtre sont stockés dans une mémoire W_MEM. Il peut y avoir différents filtres pour différentes matrices d'entrée et pour différentes matrices de sortie comme cela sera explicité par la suite.

Les données d'entrée arrivent au fil de l'eau, elles correspondent à une lecture ligne après ligne de chaque matrice d'entrée. Pour pouvoir calculer les sommes partielles associés aux neurones de sortie, l'architecture du calculateur selon l'invention doit respecter deux conditions. Tout d'abord, un même neurone de sortie ne peut pas être traité par deux unités de calcul MAC différentes. Autrement dit, chaque unité de calcul MAC est en charge de calculer des sommes partielles qui contribuent à un ou plusieurs neurone(s) de sortie différent(s) de ceux traités par les autres unités de calcul MAC. Ensuite, pour une même donnée d'entrée, la répartition des calculs au sein de tous les modules de calcul de somme partielle doit être identique. Autrement dit, la répartition du traitement des neurones de sortie entre les unités de calcul MAC au sein d'un module de calcul de somme partielle est identique pour tous les modules de calcul de somme partielle.

Sachant que les adresses des données d'entrée ($@I_x$,$@I_y$) sont fixées par lecture séquentielle des données dans une matrice d'entrée, la répartition des affectations des neurones de sortie à chaque unité de calcul MAC dépend des adresses des coefficients du filtre en mémoire.

On décrit à présent un exemple de réalisation d'un mécanisme de distribution des coefficients d'un filtre en mémoire aux différentes unités de calcul MAC d'un module de calcul de somme partielle. Cet exemple est donné à titre illustratif et non limitatif, étant entendu que l'Homme du métier saurait sans difficultés adapter ce mécanisme à d'autres schémas de distribution.

En considérant un filtre de dimensions $(K_x, K_y)$ on sait que, pour chaque nouvelle donnée d'entrée, il existe au plus $K_x*K_y$ neurones de sortie différents connectés à cette donnée d'entrée. Dans l'exemple qui suit, on se place dans un cas où il existe exactement $K_x*K_y$ neurones de sortie connectés à la donnée d'entrée (cas le plus général, hormis les données situées sur les bords de la matrice d'entrée).

Les $K_x*K_y$ neurones de sortie peuvent être identifiés par leurs coordonnées réduites $@O_x \bmod K_x$ et $@O_y \bmod K_y$ dans une matrice de taille $(K_x, K_y)$, avec mod la fonction module.

Une distribution possible des coefficients du filtre selon le neurone de sortie à calculer et en fonction de la donnée d'entrée reçue est donnée par les relations suivantes :

$$@w_x = \begin{cases} @I_x \bmod K_x - @O_x \bmod K_x \text{ si } @I_x \bmod K_x \geq @O_x \bmod K_x \\ @I_x \bmod K_x - @O_x \bmod K_x + K_x \text{ sinon} \end{cases}$$

$$@w_y = \begin{cases} @I_y \bmod K_y - @O_y \bmod K_y \text{ si } @I_y \bmod K_y \geq @O_y \bmod K_y \\ @I_y \bmod K_y - @O_y \bmod K_y + K_y \text{ sinon} \end{cases}$$

En utilisant ces relations et la contrainte qu'un neurone de sortie doit être entièrement calculé par la même unité de calcul MAC au sein de chaque module de calcul de sommes partielles, on en déduit pour chaque nouvelle donnée d'entrée reçue, les adresses des coefficients du filtre à lire en mémoire pour calculer une somme partielle associée à un neurone de sortie donné.

La figure 2b illustre un exemple de mécanisme de distribution des coefficients d'un filtre de dimensions 3x3. Sur la figure 2b sont représentées des matrices 3x3 qui donnent, à différents instants, les indices des coefficients du filtre à utiliser pour calculer une somme partielle associée à un neurone de sortie de coordonnées réduites données par les coordonnées des éléments de la matrice.

L'indice d'un coefficient du filtre est donnée par la relation $@w_x + @w_y * K_x$.

La première matrice $W^0$ donne les indices des coefficients à utiliser pour la première donnée d'entrée $I_{0,0}$. Pour chaque nouvelle donnée d'entrée lue sur une ligne de la matrice d'entrée, la matrice des coefficients du filtre subit une permutation circulaire des colonnes. Par exemple, la matrice $W^1$ est utilisée pour la deuxième donnée d'entrée $I_{0,1}$.

Lorsqu'une ligne entière de la matrice d'entrée est lue et qu'une nouvelle ligne est débutée, on reprend la première matrice $W^0$ et on lui applique une permutation circulaire des lignes pour obtenir la matrice $W^2$. Ensuite, à chaque nouvelle donnée d'entrée lue sur une ligne, on applique à nouveau une permutation circulaire des colonnes, ce qui donne la matrice $W^3$ pour la deuxième donnée d'entrée de la seconde ligne sur l'exemple de la figure 2b. Ceci est la conséquence de la distribution des coefficients du filtre selon le neurone de sortie choisi ci-avant et découle directement des relations précédentes.

La distribution des coefficients des filtres aux unités de calcul peut être réalisée de plusieurs manières.

La figure 2c illustre une implémentation du stockage des coefficients des filtres sous la forme d'une mémoire ayant une topologie de tore à deux dimensions. L'exemple de la figure 2c correspond à l'exemple de la figure 2b c'est-à-dire un filtre de dimensions 3x3.

Le dispositif décrit à la figure 2c comprend autant de registres REG que de coefficients, chaque registre étant encadré par un multiplexeur MUX à deux entrées et une sortie et un démultiplexeur DEMUX à une entrée et deux sorties. Les connexions entre les différents multiplexeurs et démultiplexeurs sont agencées pour permettre la réalisation de permutations en fonction des coordonnées en x et en y.

Il est possible de stocker soit les valeurs des coefficients des filtres dans les différents registres soit les adresses de ces coefficients stockés par ailleurs dans une autre mémoire.

A chaque nouvelle donnée d'entrée reçue, le mécanisme de permutation décrit à la figure 2b est appliqué au dispositif de la figure 2c et les différentes unités de calcul MAC viennent lire les valeurs des coefficients dans les registres correspondants.

Dans le mode de réalisation décrit aux figures 2b et 2c, les permutations sont réalisées en un cycle. Lors d'un saut de ligne d'une matrice d'entrée, les positions des coefficients de pondérations sur les colonnes sont remises à leur position initiale (position pour $I_x = 0$) en même temps que les permutations des lignes sont effectuées. Cela est possible, car la taille de l'image à traiter est connue, on peut donc en déduire l'état des permutations des colonnes du filtre W à la fin d'une ligne d'une image d'entrée. Les multiplexeurs MUX utilisés pour permuter les lignes sont connectés de telle manière à permuter aussi les colonnes du filtre W pour les remettre à leurs positions initiales.

La figure 2d décrit une autre structure de stockage et de distribution des coefficients. Cette structure est en arbre. Elle comporte autant de registres REG ou mémoires ROM que de coefficients. Elle comporte en outre plusieurs dispositifs

de permutation $PER_1, PER_2$ aptes à lire les valeurs dans les différents registres et à les permuter pour fournir en sortie les valeurs des coefficients dans un ordre de lecture différent.

Cette structure est notamment décrite dans la demande de brevet française du Demandeur publiée sous le numéro FR 3050846.

Dans le cas où le nombre d'unités de calcul MAC par module de calcul de somme partielle est strictement inférieur au nombre de coefficients d'un filtre, un ou plusieurs multiplexeurs est ajouté à la structure de distribution décrite aux figures 2c ou 2d, afin de sélectionner les coefficients à lire en fonction du degré de parallélisme. Cette sélection des coefficients pour la sérialisation des calculs est opérée entre deux lectures de données d'entrée.

La logique de distribution des coefficients est identique pour tous les modules de calcul de sommes partielles à la différence près qu'une latence est introduite dans la transmission des coefficients au module de calcul selon le niveau du module dans la structure en cascade au sein d'un ensemble de modules.

Il est ainsi possible d'avoir une logique de contrôle commune pour tous les modules de calcul, avec une bascule sur les signaux de contrôle allant d'un module au suivant et ainsi de suite. La logique de contrôle peut également être distribuée pour chaque module de calcul, avec la latence adéquate prise en compte directement dans la logique de contrôle.

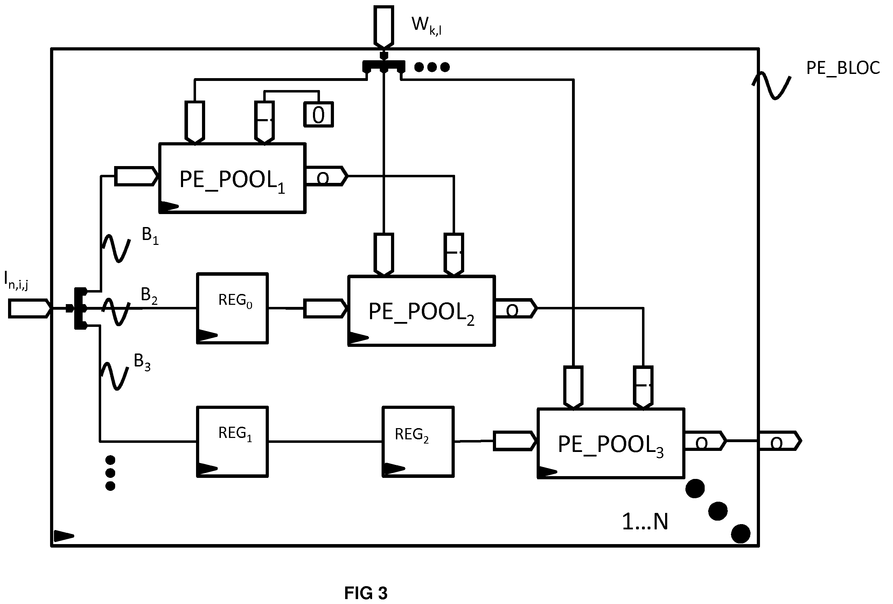

La figure 3 représente un schéma d'un ensemble PE_BLOC de modules de calcul de sommes partielles agencés en cascade, c'est-à-dire connectés en série. L'ensemble PE_BLOC comprend un nombre de modules de calcul compris entre 1 et N, N étant le nombre de matrices à traiter en entrée de la couche de convolution. Le choix du nombre de modules de calcul est fonction du degré de parallélisation de l'ensemble PE_BLOC.

L'ensemble PE_BLOC reçoit en entrée les données d'entrée $I_{n,i,j}$ appartenant aux N matrices d'entrée de la couche de convolution et ayant les mêmes coordonnées (i,j) dans chaque matrice. Par exemple, il s'agit du même pixel dans chaque image. Lorsque l'ensemble PE_BLOC comporte plusieurs modules de calcul de sommes partielles, ceux-ci sont agencés en cascade de sorte que le premier module de calcul $PE\_POOL_1$ reçoit la valeur 0 sur son entrée « i » et chaque module de calcul suivant est connecté, par son entrée « i » à la sortie du module de calcul précédent. Ce principe est illustré sur la figure 3 avec trois modules de calcul de sommes partielles. Le dernier module de calcul $PE\_POOL_3$ délivre en sortie le résultat du calcul effectué globalement par l'ensemble PE_BLOC. Sans sortir du cadre de l'invention, la valeur 0 reçue sur l'entrée « i » du premier module de calcul $PE\_POOL_1$ peut être fixée à une valeur prédéterminée différente de la valeur 0 de sorte à ajouter une valeur biais aux calculs.

De la même façon que pour un module de calcul de sommes partielles, les traitements réalisés par l'ensemble PE_BLOC sont plus ou moins parallélisables en fonction du nombre de modules de calcul de sommes partielles qu'il contient.

Lorsque l'ensemble PE_BLOC contient autant de modules de calcul de sommes partielles que de nombre de matrices N en entrée, les calculs sont entièrement parallélisés et chaque module de calcul de sommes partielles traite les données relatives à une matrice. Les valeurs obtenues en sortie de l'ensemble PE_BLOC correspondent à des sommes partielles des produits entre une donnée d'entrée et un coefficient de pondération, sur l'ensemble des matrices. Cette valeur est formalisée par une relation du type :

$$S = \sum_{n=0}^{N} I_{n,i.s_i+k,j.s_j+l} . W_{k,l}$$

Pour pouvoir réaliser la somme sur N matrices, les modules de calcul de sommes partielles sont chaînés et des latences doivent être imposées aux données d'entrée de chaque module de calcul dans le but de synchroniser la sortie d'un module de calcul avec l'entrée « i » du module de calcul suivant. La latence à imposer en entrée du $k^{ième}$ module de calcul est égale à $(k-1)*T_c$. En effet, chaque module de calcul doit attendre le calcul réalisé par les précédents modules de calcul pour réaliser son calcul. La durée du traitement réalisé par un module de calcul pour une donnée d'entrée est égale à $T_c$. Pour implémenter cette latence, un ou plusieurs registres à décalage $REG_0$, $REG_1$, $REG_2$ sont positionnés entre l'entrée de l'ensemble PE_BLOC et les entrées des modules de calcul $PE\_POOL_2$, $PE\_POOL_3$, hormis le premier module de calcul $PE\_POOL_1$.

Un registre à décalage positionné en amont du $k^{ième}$ module de calcul implémente une latence égale à $(k-1)*T_c$. Par exemple, il n'y a aucune latence en entrée du premier module de calcul $PE\_POOL_1$. Un registre à décalage $REG_0$ d'un temps de cycle $T_c$ est positionné en amont du deuxième module de calcul $PE\_POOL_2$. Ce registre à décalage maintient la donnée d'entrée pendant un temps de cycle avant de la fournir en entrée du deuxième module de calcul $PE\_POOL_2$. Un registre à décalage de deux temps de cycle $2*T_c$ (ou deux registres à décalage $REG_1, REG_2$ d'un temps de cycle chacun) est positionné en amont du troisième module de calcul $PE\_POOL_3$ et ainsi de suite.

Les modules de calcul de somme partielle $PE\_POOL_1$, $PE\_POOL_2$, $PE\_POOL_3$, d'un même ensemble PE_BLOC sont configurés pour traiter les données d'entrées lues dans un nombre N de matrices d'entrées avec une latence croissante en fonction de l'indice de la matrice d'entrée. Comme indiqué sur la figure 3, cette latence peut être introduite sous la forme de registres $REG_0$, $REG_1$, $REG_2$ positionnés sur les bus de données d'entrées $B_1$,$B_2$,$B_3$ de l'ensemble PE_BLOC.

Cette latence est appliquée de la même manière aux coefficients des filtres de convolution en fonction de la matrice d'entrée. Pour appliquer cette latence aux coefficients des filtres, une possibilité est d'ajouter des registres à décalage $REG_0$,$REG_1$,$REG_2$ de même nature sur les bus de données reliant la mémoire de stockage des coefficients des filtres aux modules de calcul PE_POOL.

Une autre possibilité consiste à décaler circulairement les coefficients de pondération dans la mémoire, le décalage circulaire étant égal à (n-1), avec n l'indice de la matrice d'entrée qui varie de 1 à N. Ce décalage est, par exemple, réalisé matériellement après l'application des permutations.

Lorsqu'un ensemble PE_BLOC ne contient qu'un seul module de calcul de sommes partielles, celui-ci effectue séquentiellement les opérations pour toutes les matrices d'entrée. Les données d'entrée sont alors présentées en entrée de l'ensemble PE_BLOC par paquets de N données de mêmes coordonnées dans chaque matrice. Dans ce cas, la somme partielle sur les N matrices n'est pas effectuée par l'ensemble PE_BLOC mais est effectuée par un additionneur externe à l'ensemble PE_BLOC.

Lorsque l'ensemble PE_BLOC contient un nombre de modules de calcul de sommes partielles strictement supérieur à 1 et strictement inférieur à N, les calculs sont partiellement parallélisés et séquentialisés.

Chaque module de calcul traite les données correspondant à une partie seulement des matrices. Les sommes partielles sont réalisées pour une partie des matrices, la somme finale sur l'ensemble des matrices étant réalisée par un additionneur externe à l'ensemble PE_BLOC.

Le tableau suivant illustre un exemple de séquencement des opérations réalisées par un ensemble PE_BLOC comprenant deux modules de calcul de sommes partielles $PE\_POOL_0$, $PE\_POOL_1$ et recevant en entrée quatre matrices indexées par les index 0,1,2,3.

| Cycle | $T_c$ | $2 * T_c$ | $3 * T_c$ | $4 * T_c$ | $5 * T_c$ | $6 * T_c$ |
|---|---|---|---|---|---|---|
| $PE\_POOL_0$ | 0 | 2 | 0 | 2 | 0 | 2 |
| $PE\_POOL_1$ | 1 | 3 | 1 | 3 | 1 | 3 |

Le degré de parallélisme de l'ensemble PE_BLOC est égal à $T_n=N/Nb\_PE\_POOL$, avec Nb_PE_POOL le nombre de modules de calcul de sommes partielles.

Au total, pour traiter une donnée d'entrée sur chaque matrice d'entrée et pour un neurone de sortie associé, le temps de calcul nécessaire à l'ensemble PE_BLOC est égal à $T_n*T_c$.

Il convient de noter que les filtres appliqués aux matrices d'entrée peuvent être différents les uns des autres et ainsi, chaque module de calcul de somme partielle PE_POOL accède à des filtres différents.

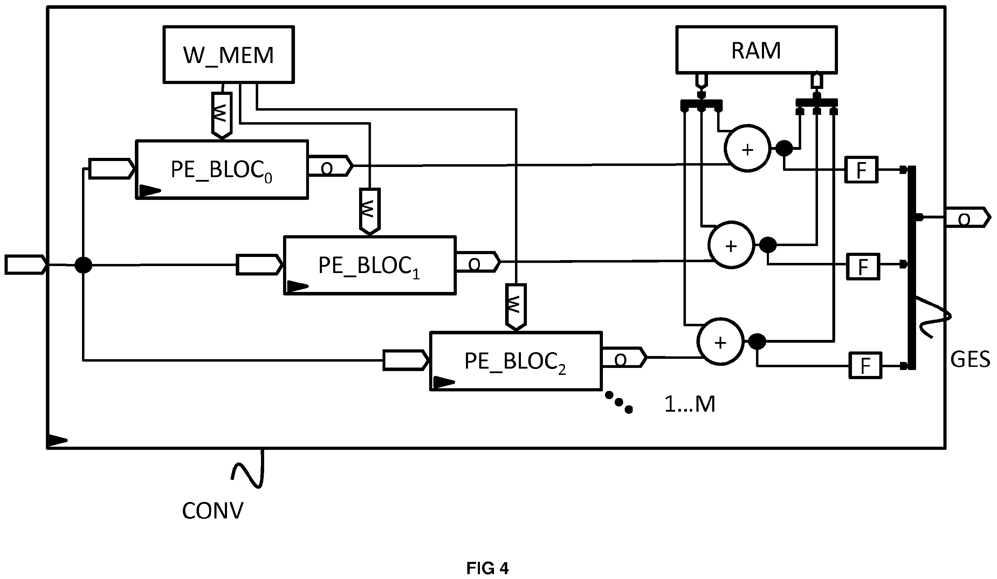

La figure 4 schématise un exemple d'architecture d'un calculateur CONV d'une couche de convolution selon un mode de réalisation de l'invention. Le calculateur CONV comprend un ou plusieurs ensembles PE_BLOC de modules de calcul de sommes partielles, le nombre maximum d'ensembles étant égal au nombre de matrices de sortie M de la couche de convolution. Chaque ensemble PE_BLOC reçoit les mêmes entrées simultanément. Autrement dit, chaque donnée d'entrée produite en entrée du calculateur CONV est dupliquée sur les entrées de chaque ensemble PE_BLOC. Le calculateur CONV comporte en outre une première mémoire W_MEM pour sauvegarder les coefficients d'un ou plusieurs noyaux de convolution $W_m$. Le nombre de noyaux de convolution est au plus égal au nombre de matrices d'entrée N multiplié par le nombre de matrices de sortie M, NxM. La mémoire W_MEM est associée à un bus de lecture de taille égale à Nb_PE*Nb_PE_POOL*Nb_PE_BLOC, où Nb_PE_BLOC est le nombre d'ensembles PE_BLOC dans un calculateur CONV. La mémoire W_MEM, ou son adressage (dans le cas d'une mémoire RAM), est implémentée, par exemple, au moyen d'un des dispositifs décrits aux figures 2c ou 2d. La mémoire W_MEM ainsi que la logique de contrôle de cette mémoire peut également être distribuée dans les ensembles PE_BLOC.

Le calculateur CONV comporte en outre au moins un additionneur ou accumulateur connecté d'une part à la sortie de chaque ensemble PE_BLOC et d'autre part à une seconde mémoire RAM. La seconde mémoire RAM peut être dupliquée pour chaque additionneur. Bien que sur la figure 4 on a représenté un seul additionneur pour chaque ensemble PE_BLOC, il est possible d'avoir plusieurs additionneurs traitant en parallèle les données produites par un ensemble PE_BLOC lorsqu'il y a plusieurs unités de calcul MAC par module de calcul de somme partielle. Le nombre d'additionneurs est égal au nombre d'unités de calcul MAC par module de calcul de somme partielle ou autrement dit à la taille du bus de données en sortie d'un ensemble PE_BLOC. Les valeurs délivrées en parallèle en sortie d'un ensemble PE_BLOC correspondent à des neurones de sortie différents et peuvent donc être traitées en parallèle par chaque additionneur.

La seconde mémoire RAM est utilisée pour stocker des résultats de sommes partielles réalisées par un accumulateur pour finaliser la somme sur la taille du noyau de convolution et sur l'ensemble des matrices dans le cas où les ensembles PE_BLOC n'ont pas un degré de parallélisation maximum. La mémoire RAM est dimensionnée pour stocker au minimum un nombre égal à M*($O_x$*($K_y$-1)+$K_x$-1) sommes partielles. La mémoire RAM est assortie d'un bus de lecture/écriture de taille égale au nombre de sommes partielles calculées parallèlement, soit Nb_PE*Nb_PE_BLOC. Les adresses des valeurs stockées dans la mémoire RAM sont calculées pour éviter que deux neurones de sortie en cours de calcul ne partagent le même bloc mémoire.

Pour pouvoir obtenir la valeur d'un neurone de sortie, il faut sommer les sommes partielles délivrées par un ensemble PE_BLOC afin de traiter toutes les données d'entrée d'un champ réceptif d'un neurone. Autrement dit, il faut sommer toutes les sommes partielles associées à une donnée d'entrée connectée à un même neurone. Sachant que les données d'entrée sont reçues séquentiellement, il est nécessaire de stocker dans la mémoire RAM plusieurs sommes partielles. Cependant il n'est pas nécessaire de stocker toutes les sommes partielles pour tous les neurones d'une matrice de sortie car une fois la valeur d'un neurone calculé, son espace mémoire peut être réallouer pour calculer un autre neurone.

L'adressage de la mémoire RAM est déterminé en fonction des adresses des neurones de sortie. Chaque adresse de la mémoire RAM est associée à un neurone de sortie différent. Lorsqu'un calcul de convolution est terminé, la place mémoire utilisée pour stocker les résultats partiels du calcul est libérée et peut être réutilisée pour un autre neurone de sortie.

Le calculateur CONV comporte en outre un module d'activation F configuré pour appliquer une fonction de transfert propre au neurone au résultat du calcul de convolution. La fonction d'activation mise en oeuvre par le module d'activation F peut prendre différentes formes. Elle peut par exemple être une fonction du type RELU pour « Rectifier Linear Unit » en anglais qui est une fonction du type f(x)=max(0,x) où max() désigne la fonction maximum des deux opérandes. La fonction réalisée peut aussi être du type f(x)=log(1+exp(x)). La fonction d'activation peut aussi être une fonction sigmoïde, par exemple une fonction tangente hyperbolique. Tout autre fonction non linéaire appropriée peut aussi être envisagée.

Par ailleurs, le module d'activation F peut comporter un registre à décalage afin d'ajuster la dynamique des valeurs des neurones de sortie.

Le calculateur CONV peut comporter un un gestionnaire de sortie GES pour reformer un vecteur de M valeurs en sortie du calculateur dans le cas où Nb_PE_BLOC est strictement inférieur à M. En effet, dans ce cas de figure, un ou plusieurs ensembles PE_BLOC réalisent des calculs de convolution pour plusieurs neurones de sortie associés (potentiellement) à différents noyaux de convolution. Dans ce cas, les données traitées par un ensemble PE_BLOC sont des vecteurs de taille égale au nombre de neurones associés. Le gestionnaire de sortie peut comporter un démultiplexeur et un ou plusieurs registres.

Le calculateur CONV peut aussi comporter un gestionnaire d'entrée (non représenté sur la figure 4) pour gérer le séquencement des données d'entrée lorsque le traitement des matrices d'entrée est partiellement ou totalement séquentialisé, c'est-à-dire lorsque Nb_PE_POOL<N.

Le calculateur CONV selon les modes de réalisation de l'invention peut être utilisé dans de nombreux domaines d'application, notamment dans des applications où une classification de données est utilisée. Les domaines d'application du calculateur CONV selon les modes de réalisation de l'invention comprennent par exemple des applications de surveillance vidéo avec une reconnaissance en temps réel de personne, des applications interactives de classification mises en oeuvre dans des téléphones intelligents (« smartphones ») pour des applications interactives de classification, des applications de fusion de données dans des systèmes de surveillance de domicile etc.

Le calculateur CONV selon l'invention peut être implémenté à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple. Le calculateur CONV comprend également une ou plusieurs mémoires qui peuvent être des registres, registres à décalage, mémoire RAM, mémoire ROM ou tout autre type de mémoire adapté à la mise en oeuvre de l'invention.

Bien que l'invention ait été décrite dans le cadre de données d'entrée en deux dimensions, elle peut être étendue à des calculs de convolution à N dimensions, avec N strictement supérieur à deux. Dans ce cas, les structures de données d'entrée, les noyaux de convolution et les cartes de sortie ont N dimensions au lieu de deux. En particulier si N=3, les données d'entrée peuvent être des séquences vidéos, les trois dimensions incluant les deux dimensions spatiales et le temps.

**Revendications**

1. Calculateur (CONV) pour calculer une couche de convolution d'un réseau de neurones artificiel, comprenant au moins un ensemble (PE_BLOC) d'au moins deux modules de calcul de somme partielle (PE_POOL$_1$,PE_POOL$_2$,PE_POOL$_3$) connectés en série, un organe de stockage (W_MEM) des coefficients d'au moins un filtre de convolution, chaque module de calcul de somme partielle (PE_POOL$_2$) comprenant au moins une unité de calcul (PE$_0$,PE$_1$) configurée pour réaliser une multiplication d'une donnée d'entrée du calculateur et d'un coefficient d'un filtre de convolution, suivie d'une addition avec la sortie du module de calcul de somme partielle (PE_POOL$_1$) précédent dans la série ou avec une valeur prédéfinie pour le premier module de calcul de somme partielle (PE_POOL$_1$) de la série, chaque ensemble (PE_BLOC) comprenant en outre, pour chaque module de calcul de somme partielle sauf le premier de la série, un registre à décalage connecté en entrée pour stocker la donnée d'entrée pendant la durée de traitement des modules de calcul de somme partielle précédents dans la série, le registre à décalage connecté en entrée du k$^{\text{ième}}$ module de calcul implémentant une latence égale à (k-1)*T$_c$ où T$_c$ est un temps de cycle et k un entier variant entre 1 et le nombre de modules de calcul, la même latence étant appliquée aux coefficients des filtres de convolution entre l'organe de stockage desdits coefficients et les modules de calculs respectifs, le calculateur (CONV) comprenant en outre au moins un accumulateur connecté en sortie de chaque ensemble (PE_BLOC) et une mémoire (RAM), les données d'entrée du calculateur provenant d'au moins deux matrices d'entrée, chaque module de calcul de somme partielle (PE_POOL) étant configuré pour recevoir en entrée les données d'entrée appartenant à des matrices d'entrée différentes et ayant les mêmes coordonnées dans chaque matrice d'entrée, à chaque cycle d'horloge, une valeur d'une matrice d'entrée lue séquentiellement ligne après ligne, étant reçue en entrée d'un module de calcul de somme partielle (PE_POOL), cette valeur étant reçue en entrée de chaque unité de calcul (PE$_0$,PE$_1$) dudit module de calcul de somme partielle (PE_POOL), lesdites unités de calcul (PE$_0$,PE$_1$) recevant chacune un coefficient du filtre de convolution pour réaliser une multiplication avec ladite valeur en vue du calcul d'un neurone de sortie différent.

2. Calculateur (CONV) selon la revendication 1 configuré pour délivrer en sortie, pour chaque sous-matrice d'entrée de dimension égale à celle du filtre de convolution, la valeur d'un neurone de sortie correspondant, l'ensemble des neurones de sortie étant agencés dans au moins une matrice de sortie

3. Calculateur (CONV) selon la revendication 2 dans lequel chaque module de calcul de somme partielle (PE_POOL) comporte au plus un nombre d'unités de calcul (PE) égal à la dimension du filtre de convolution.

4. Calculateur (CONV) selon l'une des revendications 2 ou 3 dans lequel chaque ensemble (PE_BLOC) comporte au plus un nombre de modules de calcul de somme partielle égal au nombre de matrices d'entrée.

5. Calculateur (CONV) selon l'une des revendications 2 à 4 comprenant au plus un nombre d'ensembles (PE_BLOC) égal au nombre de matrices de sortie.

6. Calculateur (CONV) selon l'une des revendications 2 à 5 dans lequel, pour chaque donnée d'entrée reçue, chaque module de calcul de somme partielle (PE_POOL) est configuré pour calculer un résultat partiel de convolution pour tous les neurones de sortie connectés à la donnée d'entrée.

7. Calculateur (CONV) selon la revendication 6 dans lequel chaque module de calcul de somme partielle (PE_POOL) comporte plusieurs unités de calcul (PE), étant chacune configurée pour calculer un résultat partiel de convolution pour des neurones de sortie différents des autres unités de calcul (PE).

8. Calculateur (CONV) selon l'une des revendications 6 ou 7 dans lequel chaque module de calcul de somme partielle (PE_POOL) est configuré, pour chaque donnée d'entrée reçue, pour sélectionner, dans l'organe de stockage (W_MEM), les coefficients d'un filtre de convolution correspondant aux neurones de sortie respectifs à calculer pour chaque unité de calcul (PE).

9. Calculateur (CONV) selon l'une des revendications 2 à 8 dans lequel les matrices d'entrée sont des images.

10. Calculateur (CONV) selon l'une des revendications précédentes dans lequel l'organe de stockage (W_MEM) a une topologie de tore à deux dimensions.

11. Calculateur (CONV) selon l'une des revendications précédentes dans lequel l'au moins un accumulateur connecté en sortie de chaque ensemble (PE_BLOC) est configuré pour finaliser un calcul de convolution permettant d'obtenir la valeur d'un neurone de sortie, à partir des sommes partielles délivrées par l'ensemble (PE_BLOC), la mémoire (RAM) étant utilisée pour sauvegarder des résultats partiels du calcul de convolution.

12. Calculateur (CONV) selon la revendication 11 dans lequel les adresses des valeurs stockées dans la mémoire (RAM) sont déterminées de manière à éviter que deux neurones de sortie en cours de calcul ne partagent le même bloc mémoire.

13. Calculateur (CONV) selon l'une des revendications précédentes comprenant en outre un module d'activation (F) d'un neurone de sortie connecté en sortie de chaque accumulateur.

**Patentansprüche**

1. Rechner (CONV) zum Berechnen einer Faltungsschicht eines künstlichen neuronalen Netzwerks, der mindestens einen Satz (PE_BLOC) von mindestens zwei in Reihe geschalteten Teilsummenberechnungsmodulen (PE_POOL$_1$, PE_POOL$_2$, PE_POOL$_3$), ein Speicherelement (W_MEM) von Koeffizienten mindestens eines Faltungsfilters umfasst, wobei jedes Teilsummenberechnungsmodul (PE_POOL$_2$) mindestens eine Recheneinheit (PE$_0$,PE$_1$) umfasst, die zum Durchführen einer Multiplikation eines Eingabedatums des Rechners und eines Koeffizienten eines Faltungsfilters konfiguriert ist, gefolgt von einer Addition mit der Ausgabe des vorherigen Teilsummenberechnungsmoduls (PE_POOL$_1$) in der Reihe oder mit einem vordefinierten Wert für das erste Teilsummenberechnungsmodul (PE_POOL$_1$) in der Reihe, wobei jeder Satz (PE BLOC) ferner für jedes Teilsummenberechnungsmodul außer dem ersten in der Reihe ein an einer Eingabe verbundenes Schieberegister zum Speichern des Eingabedatums während der Verarbeitungsdauer der vorhergehenden Teilsummenberechnungsmodule in der Reihe umfasst, wobei das an einer Eingabe verbundene Schieberegister des k-ten Berechnungsmoduls eine Latenz von gleich $(k-1)*T_c$ implementiert, worin $T_c$ eine Zykluszeit und k eine ganze Zahl ist, die zwischen 1 und der Anzahl der Berechnungsmodule variiert, wobei die gleiche Latenz auf die Koeffizienten der Faltungsfilter zwischen dem Speicherelement von den Koeffizienten und den jeweiligen Berechnungsmodulen angewendet wird, wobei der Rechner (CONV) ferner mindestens einen an einer Ausgabe jedes Satzes (PE BLOC) verbundenen Akkumulator und einen Speicher (RAM) umfasst, wobei die Eingabedaten des Rechners von mindestens zwei Eingabematrizen stammen, wobei jedes Teilsummenberechnungsmodul (PE_POOL) zum Empfangen der Eingabedaten an einer Eingabe konfiguriert ist, die zu verschiedenen Eingabematrizen gehören und in jeder Eingabematrix die gleichen Koordinaten aufweisen, wobei bei jedem Taktzyklus ein Wert einer sequentiell Zeile für Zeile gelesenen Eingabematrix an einer Eingabe eines Teilsummenberechnungsmoduls (PE_POOL) empfangen wird, wobei dieser Wert an einer Eingabe jeder Recheneinheit (PE$_0$, PE$_1$) des Teilsummenberechnungsmoduls (PE POOL) empfangen wird, wobei die Recheneinheiten (PE$_0$, PE$_1$) jeweils einen Koeffizienten des Faltungsfilters empfangen, um eine Multiplikation mit dem Wert zur Berechnung eines unterschiedlichen Ausgabeneurons durchzuführen.

2. Rechner (CONV) nach Anspruch 1, konfiguriert zum Liefern an einer Ausgabe, für jede Eingabesubmatrix, deren Dimension gleich der des Faltungsfilters ist, des Wertes eines entsprechenden Ausgabeneurons, wobei der Satz der Ausgabeneuronen in mindestens einer Ausgabematrix angeordnet ist.

3. Rechner (CONV) nach Anspruch 2, wobei jedes Teilsummenberechnungsmodul (PE POOL) höchstens eine Anzahl von Recheneinheiten (PE) aufweist, die gleich der Dimension des Faltungsfilters ist.

4. Rechner (CONV) nach Anspruch 2 oder 3, wobei jeder Satz (PE_BLOC) höchstens eine Anzahl von Teilsummenberechnungsmodulen aufweist, die gleich der Anzahl von Eingabematrizen ist.

5. Rechner (CONV) nach einem der Ansprüche 2 bis 4, der höchstens eine Anzahl von Sätzen (PE BLOC) umfasst, die gleich der Anzahl von Ausgabematrizen ist.

6. Rechner (CONV) nach einem der Ansprüche 2 bis 5, wobei für jedes empfangene Eingabedatum jedes Teilsummenberechnungsmodul (PE_POOL) zum Berechnen eines Faltungsteilergebnisses für alle mit dem Eingabedatum verbundenen Ausgabeneuronen konfiguriert ist.

7. Rechner (CONV) nach Anspruch 6, wobei jedes Teilsummenberechnungsmodul (PE POOL) mehrere Recheneinheiten (PE) aufweist, die jeweils zum Berechnen eines Faltungsteilergebnisses für Ausgabeneuronen konfiguriert sind, die sich von den anderen Recheneinheiten (PE) unterscheiden.

8. Rechner (CONV) nach Anspruch 6 oder 7, wobei jedes Teilsummenberechnungsmodul (PE POOL) für jedes empfangene Eingabedatum konfiguriert ist, um in dem Speicherelement (W_MEM) die Koeffizienten eines Faltungsfilters entsprechend den jeweiligen Ausgabeneuronen auszuwählen, die für jede Recheneinheit (PE) zu berechnen sind.

9. Rechner (CONV) nach einem der Ansprüche 2 bis 8, wobei die Eingabematrizen Bilder sind.

10. Rechner (CONV) nach einem der vorhergehenden Ansprüche, wobei das Speicherelement (W_MEM) eine zweidimensionale Torus-Topologie aufweist.

11. Rechner (CONV) nach einem der vorhergehenden Ansprüche, wobei der mindestens eine an einer Ausgabe jedes Satzes (PE BLOC) verbundene Akkumulator zum Abschließen einer Faltungsberechnung konfiguriert ist, die es ermöglicht, den Wert eines Ausgabeneurons zu erhalten, von den von dem Satz (PE BLOC) gelieferten Teilsummen aus, wobei der Speicher (RAM) zum Speichern von Teilergebnissen der Faltungsberechnung verwendet wird.

12. Rechner (CONV) nach Anspruch 11, wobei die Adressen der im Speicher (RAM) gespeicherten Werte so bestimmt werden, dass vermieden wird, dass sich zwei Ausgabeneuronen bei der Berechnung denselben Speicherblock teilen.

13. Rechner (CONV) nach einem der vorhergehenden Ansprüche, der ferner ein Aktivierungsmodul (F) von einem Ausgabeneuron umfasst, das an einer Ausgabe jedes Akkumulators verbunden ist.


**Claims**

1. A computer (CONV) for computing a convolutional layer of an artificial neural network, comprising at least one set (PE BLOC) of at least two partial sum computing modules (PE_POOL$_1$, PE_POOL$_2$, PE_POOL$_3$) connected in series, a storage member (W_MEM) for storing coefficients of at least one convolution filter, each partial sum computing module (PE_POOL$_2$) comprising at least one computing unit (PE$_0$, PE$_1$) configured to perform a multiplication of an item of input data of the computer and a coefficient of a convolution filter, followed by an addition of the output of the preceding partial sum computing module (PE _POOL$_1$) in the series or of a predefined value for the first partial sum computing module (PE _POOL$_1$) in the series, each set (PE_BLOC) further comprising, for each partial sum computing module, except the first in the series, a shift register connected at input for storing the item of input data for the processing duration of the preceding partial sum computing modules in the series, wherein the shift register connected at the input of k$^{th}$ computing module implements a latency equal to (k-1)*T$_c$ where T$_c$ is a cycle time and k an integer varying between 1 and the number of computing modules, wherein the same latency is applied to the coefficients of the convolution filters between the storage member storing said coefficients and the respective computation modules, the computer (CONV) further comprising at least one accumulator connected at output of each set (PE BLOC) and a memory (RAM), the input data of the computer coming from at least two input matrices, each partial sum computing module (PE_POOL) being configured to receive, at input, the input data belonging to different input matrices and having the same coordinates in each input matrix, at each clock cycle, a value of an input matrix, read sequentially row by row, being received at the input of a partial sum computing module (PE_POOL), this value being received at the input of each computing unit (PE$_0$, PE$_1$) of said partial sum computing module (PE_POOL), said computing units (PE$_0$, PE$_1$) each receiving a coefficient of the convolution filter to perform a multiplication with said value for the computation of a different output neuron.

2. The computer (CONV) according to claim 1, configured to output, for each input sub-matrix of dimension equal to that of the convolution filter, the value of a corresponding output neuron, the set of output neurons being arranged in at least one output matrix.

3. The computer (CONV) according to claim 2, wherein each partial sum computing module (PE POOL) contains at most a number of computing units (PE) equal to the dimension of the convolution filter.

4. The computer (CONV) according to one of claim 2 or 3, wherein each set (PE BLOC) contains at most a number of partial sum computing modules equal to the number of input matrices.

5. The computer (CONV) according to one of claims 2 to 4, comprising at most a number of sets (PE BLOC) equal to the number of output matrices.

6.  The computer (CONV) according to one of claims 2 to 5, wherein, for each received item of input data, each partial sum computing module (PE_POOL) is configured to compute a partial convolution result for all of the output neurons connected to the item of input data.

7.  The computer (CONV) according to claim 6, wherein each partial sum computing module (PE POOL) contains multiple computing units (PE), each one being configured to compute a partial convolution result for different output neurons of the other computing units (PE).

8.  The computer (CONV) according to one of claim 6 or 7, wherein each partial sum computing module (PE POOL) is configured, for each received item of input data, to select, in the storage member (W_MEM), the coefficients of a convolution filter corresponding to the respective output neurons to be computed for each computing unit (PE).

9.  The computer (CONV) according to one of claims 2 to 8, wherein the input matrices are images.

10. The computer (CONV) according to one of the preceding claims, wherein the storage member (W_MEM) has a two-dimensional toroidal topology.

11. The computer (CONV) according to one of the preceding claims, wherein the at least one accumulator connected at the output of each set (PE BLOC) is configured to finalise a convolution computation for obtaining the value of an output neuron from the partial sums delivered by the set (PE_BLOC), the memory (RAM) being used to save partial results of the convolution computation.

12. The computer (CONV) according to claim 11, wherein the addresses of the values stored in the memory (RAM) are determined so as to avoid two output neurons sharing the same memory block during the computation.

13. The computer (CONV) according to one of the preceding claims, further comprising an activation module (F) for activating an output neuron connected at the output of each accumulator.

FIG 1a

EP 3 844 679 B1

FIG 1b

FIG 1c

EP 3 844 679 B1

FIG 1d

FIG 2

EP 3 844 679 B1

FIG 2a

$W^0$

| $w_0$ | $w_2$ | $w_1$ |
|---|---|---|
| $w_6$ | $w_8$ | $w_7$ |
| $w_3$ | $w_5$ | $w_4$ |

$@I_x + 1$ →

$W^1$

| $w_1$ | $w_0$ | $w_2$ |
|---|---|---|
| $w_7$ | $w_6$ | $w_8$ |
| $w_4$ | $w_3$ | $w_5$ |

$@I_y + 1$

$@I_x + 1$
$@I_y + 1$

$W^2$

| $w_3$ | $w_5$ | $w_4$ |
|---|---|---|
| $w_0$ | $w_2$ | $w_1$ |
| $w_6$ | $w_8$ | $w_7$ |

$W^3$

| $w_4$ | $w_3$ | $w_5$ |
|---|---|---|
| $w_1$ | $w_0$ | $w_2$ |
| $w_7$ | $w_6$ | $w_8$ |

FIG 2b

EP 3 844 679 B1

FIG 2c

FIG 2d

$W_{k,l}$

PE_BLOC

$I_{n,i,j}$

$B_1$

$B_2$

$B_3$

PE_POOL$_1$

REG$_0$

PE_POOL$_2$

REG$_1$

REG$_2$

PE_POOL$_3$

1...N

0

**FIG 3**

EP 3 844 679 B1

FIG 4

**RÉFÉRENCES CITÉES DANS LA DESCRIPTION**

**Documents brevets cités dans la description**

- US 2018046906 A1

- FR 3050846

**Littérature non-brevet citée dans la description**

- **K. FUKUSHIMA**. Neocognitron: A self-organizing neural network model for a mechanism of pattern recognition unaffected by shift in position. *Biological Cybernetics*, 1980, vol. 36 (4), ISSN 0340-1200, 193-202
- **C ZHAN**. *Optimizing FPGA-based accelerator design for deep convolutional neural networks*

- **A RAHMAN**. *Efficient FPGA accélération of convolutional neural networks using logical 3D compute array*
- **H.LI**. *A high performance FPGA-based accelerator for large scale convolutional neural networks*
- **PAOLO MELONI et al.** *NEURAghe: Exploiting CPU-FPGA Synergies for Efficient and Flexible CNN Inference Accélération on Zynq SoCs*, December 2017